# EUROPEAN PATENT SPECIFICATION

(11) **EP 2 017 525 B1**
(45) Date of publication and mention of the grant of the patent: **16.07.2014**
(21) Application number: 06722437.8
(22) Date of filing: 09.05.2006
(51) Int. Cl.: F21S 8/00, F21S 9/02, F21V 33/00, H02J 7/00, H05B 37/02, F21W 131/103, F21W 111/02, F21Y 101/02

(54) **SOLAR POWERED LED STREET LAMP WITH AUTOMATIC LIGHT CONTROL**
DURCH SONNENENERGIE GESPEISTE LED-STRASSENLAMPE MIT AUTOMATISCHER LICHTSTEUERUNG
LAMPE D'ECLAIRAGE PUBLIC A DEL ALIMENTEE PAR ENERGIE SOLAIRE DOTEE D'UNE COMMANDE AUTOMATIQUE DE LUMIERE

(30) Priority: 09.05.2005 CN 200520018060 U
(43) Date of publication of application: 21.01.2009
(73) Proprietor: Chan, Sze Keun, Hong Kong 10000 (CN)
(72) Inventor: Chan, Sze Keun, Hong Kong 10000 (CN)
(74) Representative: Dennemeyer & Associates S.A.
(86) International application number: PCT/CN2006/000920
(87) International publication number: WO 2006/119700

(56) References cited:
- WO-A1-2004/029919
- CN-A- 1 434 242
- CN-Y- 2 581 804
- DE-A1- 3 635 209
- GB-A- 2 081 485
- JP-A- 2000 057 815
- JP-A- 2002 270 381
- JP-A- 2004 281 327

## Description

### TECHNICAL FIELD

This invention relates to a solar powered LED streetlight and more particularly to an LED streetlight, which has direction board or billboard or light box, brightness and darkness auto-adjustment function and can use solar as its power source.

### BACKGROUND ART

At present, most of the streetlight use generic power and lamp bulb. There is also example of convert solar power to generic power supply the streetlight. Because the power consumption of generic lamp is pretty large, the solar power collected in the daytime can not supply all the night and generic power is needed for supplement. Moreover, the streetlight keeps on working all the night, which will shorten the life of lamp bulb. Thus the current streetlight does not meet the goal of 100% energy saving. LED has the advantages of long life, high luminous flux, null radiation, anti-strike and low power consumption. It belongs to green power saving lighting and can make up the above mentioned shortages of current streetlight. In addition, present direction board or guide post on the roadsides are made from reflection materials, which needs to function by reflecting the external light, like, streetlight. The electron bulletin board or some commercial billboard need to set up a stand rack. All these can sometimes cause inconvenience.

CN2581804Y discloses a solar powered street lamp with automatic light control, which comprises a solar photovoltaic board, a lamp pole, a lamp, a billboard, a base with an accumulator storage battery inside, a central controller. The features are that the solar photovoltaic board is mounted on the top end of the lamp pole, the billboard is mounted on the lamp pole, the accumulator storage battery set and the central controller are situated in the base, the lamp is mounted on the transversal bar of the lamp pole

### DISCLOSURE OF INVENTION

It is, therefore, an object of the invention, to solve the present technical shortage or problems and to provide a kind of green, solar-powered streetlight, which has billboard or direction board or light box with LED lighting and which has a long lifetime. The streetlight can be used on the road or in the residential area.

It is another object of the invention to provide the brightness/darkness detection sensor, which will sense the brightness/darkness, sending signal to central controller, to turn streetlight on or off automatically.

It is another object of the invention to provide the human body inductor, which will send signal to central controller, to tune the light into low brightness status when it detects that nobody is in the detection area, or to tune the light into high brightness status when it detects that somebody is in the detection area. Because the light brightness can change, it reduces the waste of power and makes good use of the solar power collected in the daytime while no more supplement power is needed. Because the life of LED will not be influenced by brightness change, this overall increases the life time of lamp.

It is another object of the invention to install the direction board or billboard or light box on the lamp pole.

These objects are accomplished by a solar powered street lamp with automatic light control in accordance with claim 1.

Within the invention, the photovoltaic board collects solar power and when the light turns on in the night, the photovoltaic board on the direction board or billboard or light box continues to collect LED light power. The solar module will charge the storage battery via diode D1, switch K2, normally closed end; when central controller detects that the storage battery is full, it will connect switch K2 and K1, cut charge circuit and connect load R, protecting the storage battery from overcharge.

Within the invention, the brightness/darkness detection sensor can configure the brightness/darkness threshold value. When the darkness threshold value is met, the signal will be sent to central controller, to connect switch K3. Then the power is on, lighting LED lamp and direction board or billboard or light box with low brightness and low power light. When the brightness threshold value is met, the signal will be sent to central controller, to disconnect switch K3. Then the power of streetlight is off.

Within the invention, the human body inductor is used to detect human body. When somebody is in the detection area, the inductor will automatically send signal to central controller, the controller will adjust the voltage and current from DC/DC converter, LED lamp and LED in the direction board or billboard or light box turns into high brightness status; when somebody is out from the detection area, they will turn back to low brightness status. As time goes on, the capacity of storage battery goes down, the central controller will adjust the voltage and current from DC/DC converter until disconnecting switch K3 and connecting load R, which will prevent storage battery from over-discharge damage.

Within the invention, the LED can be replaced by LED chip or any other lighting components. The invention can use generic power when removing solar module and re-allocating the brightness/darkness detection senor on the top of lamp pole.

In the said invention, the energy-saving LED is used as lighting source and the human body inductor is installed. When there is nobody, especially deep in the night, the light can be tuned to a low brightness status. Because of it, the power is saved, the solar power collect in the daytime is enough for the whole night without the need of other supplement power. And because of the brightness/darkness detection senor, the streetlight can be automatically turned on/off, few human resources will need to handle this matter everyday.

For the better understanding of the said invention, the objects, characteristics and advantages of the said invention can be illustrated in details through drawings and carrying-outs.

### BRIEF DESCRIPTION OF THE DRAWINGS

FIG. 1 is a structure chart of a solar powered LED street lamp with automatic light control
FIG. 2 is the circuit diagram of a solar powered LED street lamp with automatic light control
FIG. 3 is a structure chart of a generic powered LED street lamp with automatic light control
FIG. 4 is a structure chart of the carrying out of the solar powered LED street lamp with automatic light control
FIG. 5 is a structure chart of another better carrying out of the solar powered LED street lamp with automatic light control

In these figures, 1. solar photovoltaic board; 11. solar module/solar panel; 2. brightness/darkness detection sensor; 3 lamp pole; 31. transversal bar of the lamp pole; 4. base; 5 . LED lamp; 51. LED; 6. LED direction board or billboard or light box; 7. human body inductor; 8. accumulator storage battery; 9. central controller; 10. DC/DC converter; 61 . solar photovoltaic board; 62. brightness/darkness detection sensor; 63. LED

### BEST MODE FOR CARRYING OUT THE INVENTION

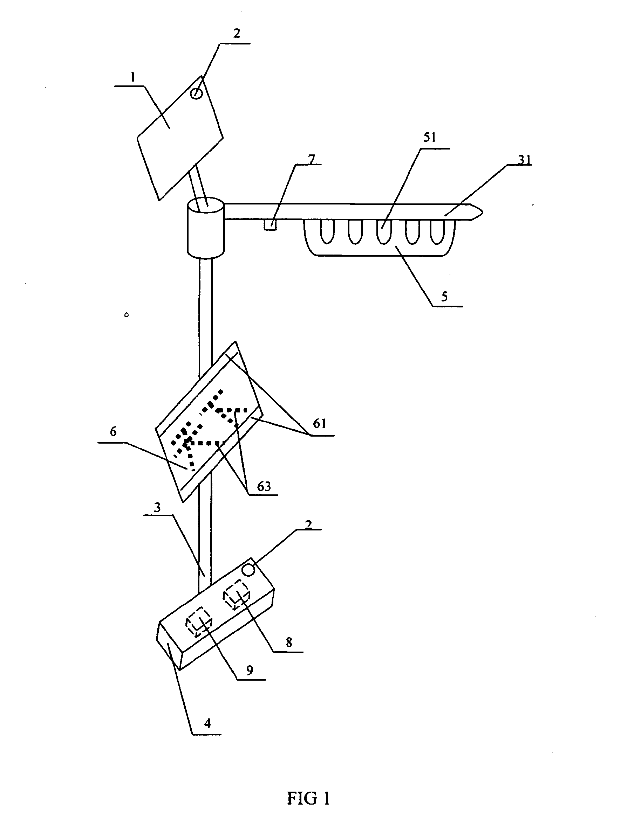

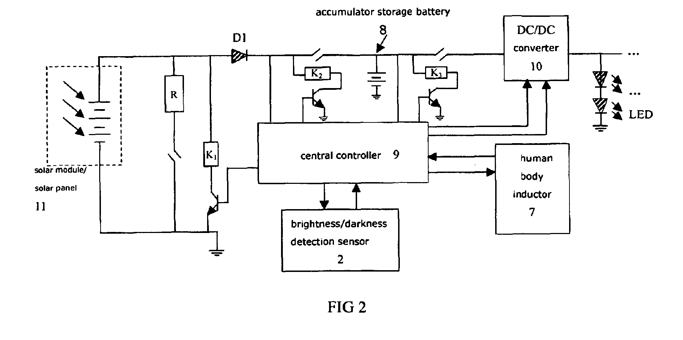

There is shown in FIG. 1 and 2, the invention is comprised of a solar photovoltaic board(1), a brightness/darkness detection sensor(2), a lamp pole(3), a LED lamp(5), a LED direction board or billboard or light box (6), a base(4) with an accumulator storage battery(8) inside, a central controller(9) and a human body inductor(7). The features are that the solar photovoltaic board(1) is mounted on the top end of the lamp pole(3), the LED direction board or billboard or light box (6) is mounted on the lamp pole(3) or the lamp pole(3) itself is designed to be direction board or billboard or light box, the accumulator storage battery set(8) and the central controller(9) are situated in the base(4), the human body inductor(7) and the LED lamp(5) are mounted on the transversal bar(31) of the lamp pole, and a plurality of LED(63) are arrayed so as to constitute the characters or the marks on the LED direction board or billboard or light box (6).

The said solar photovoltaic board(1 and 61) collects solar power and when the light turns on in the night, the photovoltaic board(61) continues to collect light power from LED lamp(5). The solar module(11) will charge the storage battery(8) via diode D1, switch K2, normally closed end; when central controller(9) detects that the storage battery is full, it will connect switch K2 and K1, cut charge circuit and connect load R, protecting the storage battery(8) from overcharge.

The said central controller(9) can configure the time of on/off or set up a time, like, after 12 o'clock of midnight, the central controller(9) sends signal to alter the voltage and current from DC/DC converter(10), LED lamp(5)and LED(63) on the direction board or billboard or light box (6) turns to low brightness status. The said central controller(9) can also send and receive wireless data.

The generic power or other kind of power like wind power can also be used in the invention.

Within the invention, the brightness/darkness detection sensor(2) can be installed in both solar photovoltaic board(1) and the base(4). The brightness/darkness detection sensor(2) can configure the brightness/darkness threshold value. When the darkness threshold value is met, the signal will be sent to central controller(9), to connect switch K3. Then the power is on, lighting LED(51) in LED lamp(5) and LED(63) on direction board or billboard or light box (6) with low brightness and low power light. When the brightness threshold value is met, the signal will be sent to central controller(9), to disconnect switch K3. Then the power of streetlight is off.

Within the invention, the human body inductor(7) is used to detect human body. When somebody is in the detection area, the inductor(7) will automatically send signal to central controller(9), the controller will adjust the voltage and current from DC/DC converter(10), LED lamp(5) and LED(63) in the direction board or billboard or light box turns into high brightness status; when somebody is out from the detection area, they will turn back to low brightness status. As time goes on, the capacity of storage battery(8) goes down, the central controller(9) will adjust the voltage and current from DC/DC converter(10) until disconnecting switch K3 and connecting load R, which will prevent storage battery from over-discharge damage.

Within the invention, the LED(51 and 63) can be replaced by LED chip or any other lighting components.

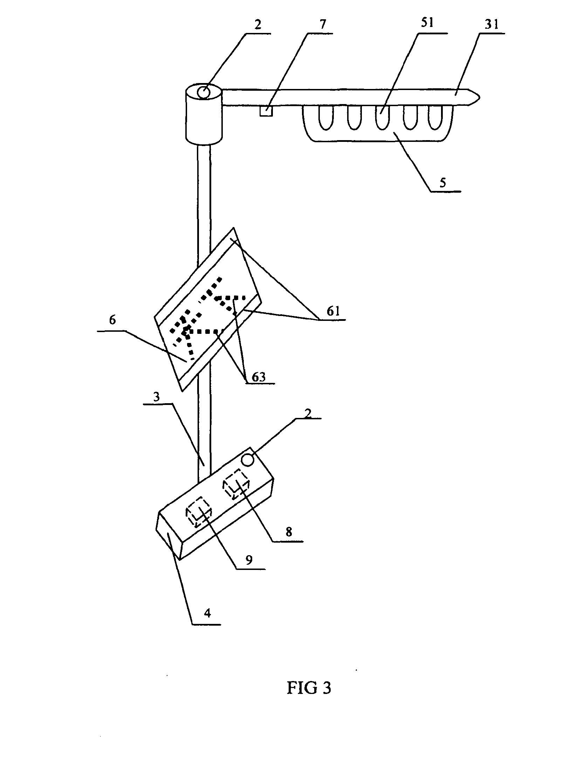

There is shown in FIG. 3, the invention removes the solar photovoltaic board(l) and generic power is led from the base(4). The brightness/darkness detection sensor(2) is installed on the top of lamp pole(3)

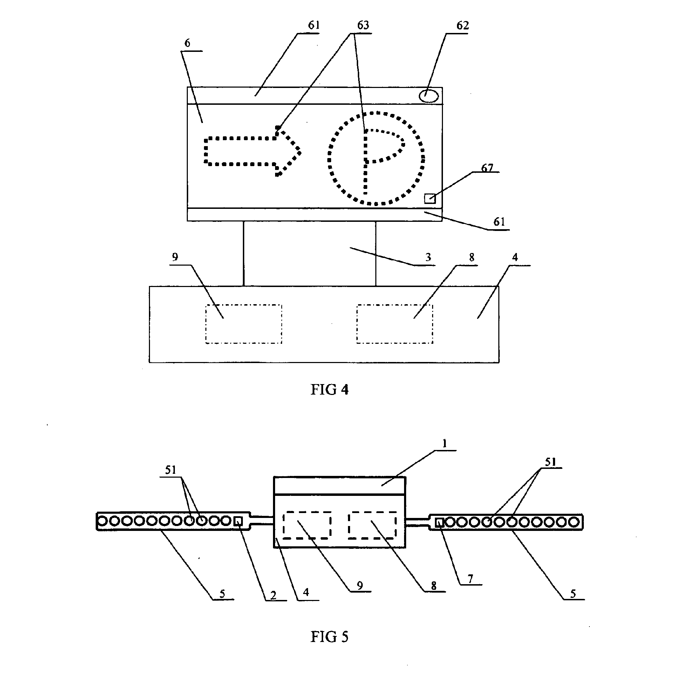

There is shown in FIG. 4, the other carrying out of the invention, which comprises: LED direction board or billboard or light box (6), solar photovoltaic board(61), brightness/darkness detection sensor(62), LED(63), lamp pole(3), base(4), human body inductor(7), accumulator storage battery(8), central controller(9). In such area as residential block, street center garden or building green stripe, where the need for lighting is relatively low, the LED lamp(5) can be removed while a plurality of LEDs (63), which are arrayed so as to constitute the characters or the marks on the LED direction board or billboard or light box (6), can provide the lighting wherein. The features are: The said solar photovoltaic board(61), brightness/darkness detection sensor(62), human body inductor(7), are all installed on direction board or billboard or light box (6), and central controller(9) is installed within the base(4). The electricity theory is the same as the first carrying out illustrated in figure 1 and 2.

There is shown in FIG. 5, another better carrying out of the invention, which comprises: solar photovoltaic board(1), LED lamp(5), LED(51) in LED lamp(5), brightness/darkness detection sensor(2), human body inductor(7), accumulator storage battery(8), central controller(9) in base(4). The features are: the said solar photovoltaic board(1) is installed on the base(4), the said LED lamp(5) is made from soft transparent or translucent material, which is installed on the sides of base(4). As per the carrying out, the solar power LED streetlight can be installed on the road side and any place where lighting is needed.

The said invention is evolved and progressed in practical value and meets the need of new type of lighting market, which is green, power-saving, elegant in appearance and convenient for mass production. While there have been shown and described above what are at present considered to be the preferred carrying out of the invention, it will be apparent to those skilled in the art that various changes and modification can be made herein without departing from the scope of the invention as defined by the appended claims.

## Claims

1. Solar powered LED street lamp with automatic light control, which comprises a solar photovoltaic board(1), a brightness/darkness detection sensor(2), a lamp pole(3), a LED lamp(5), a LED direction board or billboard(6), a base(4) with an accumulator storage battery(8) inside, a central controller (9) and an infrared human body inductor(7), in which features are that the solar photovoltaic board(1) is mounted on the top end of the lamp pole(3), the LED direction board or billboard(6) is mounted on the lamp pole(3), the accumulator storage battery set(8) and the central controller(9) are situated in the base(4), the infrared human body inductor(7) and the LED lamp(5) are mounted on the transversal bar(31) of the lamp pole, and a plurality of LED(63) are arrayed so as to constitute the characters or the marks on the LED direction board or billboard(6), the said brightness/darkness detection sensor(2) connects central controller(9), the said infrared human body inductor(7) connects central controller(9), a solar photovoltaic board(61) is installed on direction board or billboard, the said solar photovoltaic board(1 and 61) collects solar power and when the light turns on In the night, the photovoltaic board(61) continues to collect light power from LED lamp(5), and the photovoltaic board (1) can be replaced by other kind of power, and the said LED(5) and LED(63) can be replaced by LED chip or any lighting components.

2. Solar powered LED street lamp with automatic light control of claim 1 is **characterized in that**, the said solar module(11) connects accumulator storage battery(8) and central controller(9) via diode D1, switch K2 and normally closed end.

## Patentansprüche

1. Solarbetriebene LED-Straßenlampe mit automatischer Lichtsteuerung, die eine Solar-Photovoltaikplatte (1) umfasst, einen Helligkeit-/Dunkelheit-Nachweissensor (2),einen Laternenpfahl (3), eine LED-Lampe (5), eine LED-Richtungsplatte oder Plakatwand (6), eine Basis (4) mit einer Akkumulator-Speicherbatterie (8) darin, eine zentrale Steuerung (9) und einen Infrarot-Körperinduktor (7) dessen Merkmale sind, dass die Solar-Photovoltaikplatte (1) auf dem oberen Ende der des Laternenpfahls (3) montiert ist, die LED-Richtungsplatte oder Plakatwand (6) auf dem Laternenpfahl (3) montiert ist, der Akkumulator-Speicherbatteriesatz (8) und die zentrale Steuerung (9) in der Basis (4) angeordnet sind, der Infrarot-Körperinduktor (7) und die LED-Lampe (5) auf der Querstange (31) des Laternenpfahls (3) montiert sind, und eine Vielzahl von LEDs (63) angeordnet sind, um die Buchstaben oder die Markierungen auf der LED-Richtungsplatte oder Plakatwand (6) zu bilden, der Helligkeit-/Dunkelheit-Nachweissensor (2) sich mit der zentralen Steuerung (9) verbindet, der Infrarot-Körperinduktor (7) sich mit der zentralen Steuerung (9) verbindet, eine Solar-Photovoltaikplatte (61) auf der Richtungsplatte oder der Plakatwand installiert ist, die Solar-Photovoltaikplatte (1 und 61) Sonnenenergie sammelt, und wenn sich das Licht in der Nacht einschaltet, die Photovoltaikplatte (61) weiterhin Lichtenergie von der LED-Lampe (5) sammelt, und die Photovoltaikplatte (1) durch eine andere Art von Energie ersetzt werden kann und die LED (5) und LED (63) durch LED-Chips oder andere Beleuchtungskomponenten ersetzt werden können.

2. Solarbetriebene LED-Straßenlampe mit automatischer Lichtsteuerung nach Anspruch 1, **dadurch gekennzeichnet, dass** das Solarmodul (11) die Akkumulator-Speicherbatterie (8) und die zentrale Steuerung (9) über die Diode D1, den Schalter K2 und das normalerweise geschlossene Ende verbindet.

## Revendications

1. Lampadaire à LED solaires muni d'une commande de lumière automatique, qui comprend une carte photovoltaïque solaire (1), un détecteur de luminosité/d'obscurité (2), une colonne de lampadaire (3), une lampe à LED (5), une carte ou un panneau à LED (6), une base (4) munie d'un accumulateur (8) à l'intérieur, un contrôleur central (9) et un inducteur infrarouge de détection du corps humain (7), **caractérisé en ce que** la carte photovoltaïque solaire (1) est montée sur la partie supérieure de la colonne de lampadaire (3), la carte ou le panneau à LED (6) est monté(e) sur la colonne de lampadaire (3), l'accumulateur (8) et le contrôleur central (9) sont situés dans la base (4), l'inducteur infrarouge de détection du corps humain (7) et la lampe à LED (5) sont montés sur la barre transversale (31) de la colonne de lampadaire, et plusieurs LED (63) sont disposées de façon à constituer les caractères ou les marques sur la carte ou le panneau à LED (6), dans lequel ledit détecteur de luminosité/d'obscurité (2) connecte le contrôleur central (9), ledit inducteur infrarouge de détection du corps humain (7) connecte le contrôleur central (9), une carte photovoltaïque solaire (61) est installée sur la carte de direction ou le panneau, ladite carte photovoltaïque solaire (1 et 61) collecte l'énergie solaire et, lorsque la lumière s'allume la nuit, la carte photovoltaïque (61) continue à collecter l'énergie lumineuse de la lampe à LED (5), et la carte photovoltaïque (1) peut être remplacée par un autre type d'énergie, et ladite lampe à LED (5) et lesdites LED (63) peuvent être remplacées par une puce à LED ou n'importe quel composant d'éclairage.

2. Lampadaire à LED solaires muni d'une commande de lumière automatique selon la revendication 1, **caractérisé en ce que** ledit module solaire (11) connecte l'accumulateur (8) et le contrôleur central (9) via une diode D1, un commutateur K2 et une extrémité normalement fermée.
